# EUROPEAN PATENT APPLICATION

(11) **EP 0 752 792 A2**
(43) Date of publication of application: **08.01.1997**
(21) Application number: 96304159.5
(22) Date of filing: 05.06.1996
(51) Int. Cl.: H04Q 7/16

(54) **Address identification system for groups of data receivers**

(30) Priority: 06.06.1995 US 476599
(71) Applicant: OI ELECTRIC CO., LTD., Yokohama-shi, Kanagawa 222 (JP)
(72) Inventor: Goto, Satoru, c/o OI Electric Co, Ltd, Kohoku-ku, Yokohama-shi, Kanagawa 222 (JP)
(74) Representative: Allman, Peter John

(57) **Abstract**

An address identification system is described for determining whether a data transmission conforming to POCSAG radiopaging transmission standards is intended for a particular data receiver or group of data receivers. Associated with each data receiver are first and second receiver addresses. The first and second receiver addresses may be used to uniquely identify a data receiver or identify a group of data receivers to which the user of the data receiver device belongs. Each data transmission includes a transmitted address word with subsequently transmitted message words. A data transmission to a particular data receiver user within the group can be made by including in the transmitted address word and first message word address information identifying a particular user within the group of data receiver users. A data transmission to all the data receivers in the group can be made by including in the transmitted address word and first message word address information common to all members of the group. The inventive method and apparatus may be advantageously used to determine whether the transmitted address and message words are intended for a data receiver or group of data receivers including the inventive apparatus.

## Description

### FIELD OF THE PRESENT INVENTION

The present invention is directed toward a method and apparatus for identifying a particular data receiver device and all the data receiver devices that belong to a group of data receiver devices, and more particularly, to an improved method for identifying a data receiver device and group of receiver devices and determining whether a data transmission is intended for a receiver device or group of receiver devices.

### BACKGROUND OF THE INVENTION

In 1976, an international group of engineers known as the Radiopaging Code Standards Group (RCSG) developed a mutually acceptable code suitable for wide area paging referred to as the Post Office Code Standardization Advisory Group (POCSAG). RCSG is comprised of a number of companies from several nations involved in paging and other related electronic applications, including manufacturers from the United States, Japan, and Europe. RCSG has published reports and a book to encourage industry members to adopt their standard format for radio transmissions to pager and receiver devices. The RCSG continues to promulgate reports on the POCSAG standards concerning further applications and developments. The POCSAG format is used in many countries.

Messages can be transmitted in numeric format alone or in alpha-numeric format. The POCSAG system can support a wide range of receiver and paging services, including alert-only pagers, numeric message display pagers, and alphanumeric display pagers. Alpha-numeric paging allows for a far greater range of messages to be discreetly passed to the user. Most alpha-numeric pagers provide storage capability to store transmitted messages. A large portion of the numeric display pagers are used to receive the telephone number of the person calling the pager. This is usually accomplished by routing paging calls from the switched telephone network to a transmitter which transmits the calling number to the pager or by a switched telephone network that provides for automatic transmission of the callers telephone number to the pager. Alpha-numeric transmissions are frequently being used by data service companies to transmit data to the receiver device of the subscriber to the data service. For instance, data service companies can transmit pricing information for stocks and commodities, AP newswire information, and other desired data services to the subscriber's receiver.

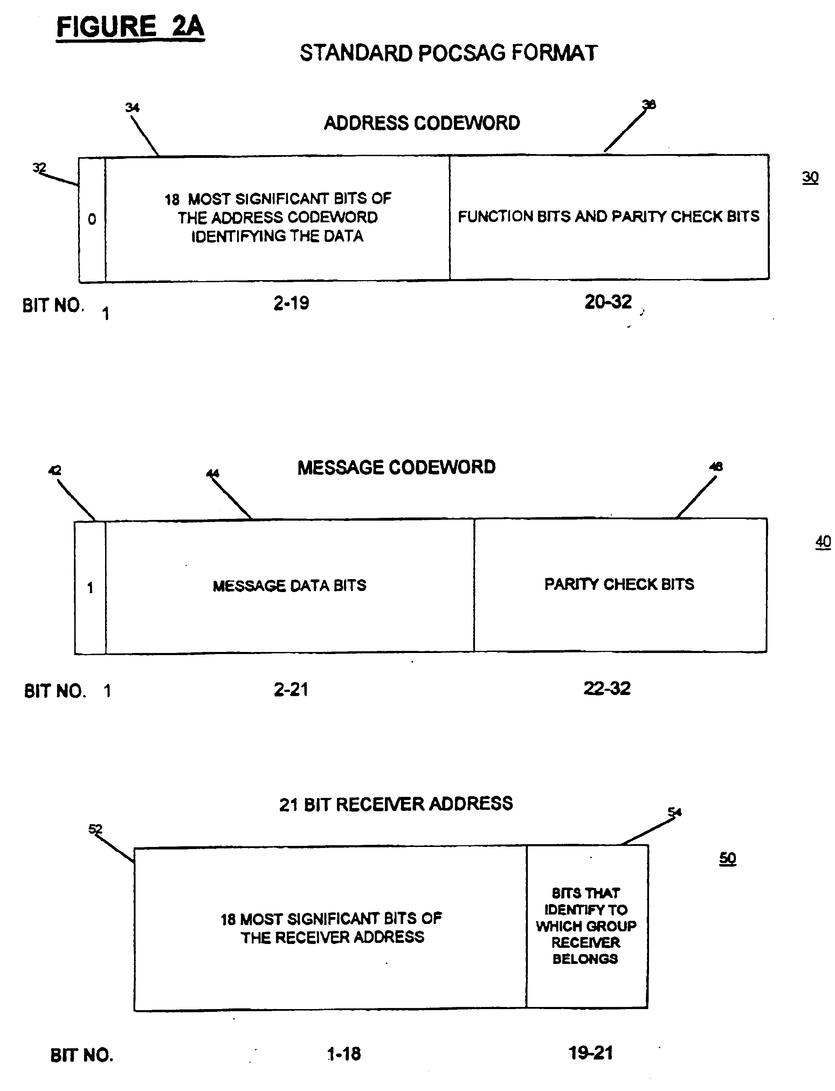

According to the POCSAG format, data is transmitted in batches of eight frames wherein each frame contains two thirty-two bit codewords with the most significant bits transmitted first. At the start of a batch is a thirty-two bit long synchronization codeword. FIG. 2A shows the format of the address codeword **30** and message codeword **40** that may be in a batch. The first bit **32** and **42** of the address and message codewords, respectively, identifies whether the codeword is a message or address codeword. Each transmission begins with a preamble that helps the pager attain bit synchronization.

Each pager or receiver device adhering to the POCSAG format is assigned a twenty-one bit address **50** (FIG. 2A) that uniquely identifies that receiver. The eighteen most significant bits of the receiver address **52** that identify the receiver are at bit numbers one through eighteen. The three least significant bits of the twenty-one bit receiver address word **54**, bit numbers nineteen through twenty-one, identify the group to which the receiver belongs. The pager population is divided into eight groups wherein a group number corresponds to one of the eight frames in the transmitted batch. The significance of the group number is that after attaining bit synchronization, the pager will begin reading and checking frames starting at the frame number corresponding to the group to which the pager is assigned. For example, if the three least significant bits **54** (FIG. 2A) identify the pager as a group five pager, then that pager will check the fifth frame of the batch to determine if there is an address codeword **30** whose eighteen most significant bits **34** match the eighteen most significant bits of the receivcr address **52**. If there is a match, then that pager will accept the message codewords **40** following the matched address codeword. The three bits used to identify the group to which the receiver belongs **54** are only associated with the receiver and not included in the transmitted address codeword **30**.

The end of the message is indicated by another address codeword or a thirty-two bit idle codeword. The POCSAG format allows for the transmission of messages of unlimited length. Thus, if the pager accepts all the message codewords following the address codeword in the batch without noticing another address codeword or idle codeword, then the pager will remain activated to receive the next batch which contains further message codewords associated with the previously transmitted address codeword. Receiving devices that are capable of receiving data conforming to the POCSAG format are well known in the art and described in "Radiopaging Code No. 1," prepared by the Radiopaging Code Standards Group (1986). This book also describes in further detail the POCSAG format for data transmissions and is incorporated herein by reference.

To check the transmitted address codeword, prior art pagers typically could identify the eighteen most significant bits of their address **52** (FIG. 2A) in a transmitted address codeword **34** entirely by dedicated logic or by a microprocessor matching a stored representation. Most pagers are designed to check the address codeword with circuitry not involving the central processing unit ("CPU"), such as dedicated logic. Prior art pagers would activate the CPU to receive the subsequent message codewords only upon detecting the proper address.

According to the known art, to transmit a message to an individual who is a member of a group within an organization, such as a division within a company, each individual pager user must be assigned a unique identification address different from others within and without the group. As the number of pager users has increased greatly, the number of available eighteen bit address codewords conforming to the POCSAG standard format is rapidly diminishing because POCSAG transmissions only provide for one address codeword to be transmitted in a batch.

To page all the members of a group, the address codeword of each member of the group must be sequentially transmitted with the same message, *i.e.* string of message codewords, to each individual member of the group. For larger groups this method can be very time consuming and inefficient because multiple transmissions of the same message must be transmitted to each member of the large group.

### SUMMARY OF THE DISCLOSURE

It is an object of the present invention to provide an improved apparatus and method for identifying a pager or receiver device.

Another object of the present invention is to use the POCSAG format so individual members of a group can be identified by the group to which they belong and further identified individually.

Yet another object of the present invention is to provide a method and apparatus capable of transmitting data to a group of receivers with a single transmission conforming to the POCSAG data tranmission format.

An even further object of the present invention is to extend the life of the battery as long as possible.

These and other objects and advantages are achieved in a data receiver which in accordance with the present invention checks an address word transmitted and associated with message words, wherein the address and message words are comprised of a plurality of bits, to determine if the transmitted address word matches at least one first receiver address associated with the receiver. If there is no match, the receiver ignores the non-matching transmission, reduces power consumption, and awaits the next transmission. If the transmitted address word matches at least one first receiver address, then the receiver is able to determine whether the following first transmitted message word contains further address information.

If the transmitted address word matches the first receiver address and the first transmitted message word does not contain further address information, then the receiver accepts the message words transmitted and associated with the address word. If, however, the transmitted address word matches the first receiver address word and the transmitted first message word contains further address information, then the receiver determines whether the first transmitted message word or portion thereof matches at least one second receiver address. If there is no match, the receiver expunges the non-matching transmission, reduces power consumption, and awaits the next transmission.

If the first transmitted message word contains further address information and the first transmitted message word matches at least one second receiver address, then the receiver accepts the message words transmitted and associated with address word and first transmitted message word.

The receiver includes a processor unit or other circuitry such as dedicated logic for determining whether the transmitted address word and the first message word respectively match a first receiver address and second receiver addresses, and whether the first transmitted message word contains further address information. The processor unit may include dedicated logic or a microprocessor. Preferably the processor unit and dedicated logic external to the processor unit are electronically alterable or programmable such that the first and second receiver addresses represented therein can be modified.

The receiver can also display and store the accepted transmitted message words and transfer the message words to a peripheral device such as a computer for storage therein.

### BRIEF DESCRIPTION OF THE DRAWINGS

A detailed description of an embodiment of the invention will be made with reference to the accompanying drawings, wherein like numerals designate corresponding parts in the several figures.

FIG. 1 is a block diagram of the address verification system, including a processor unit or logic gates for determining whether the transmitted address word and the first transmitted message word match at least one first and second receiver addresses represented therein, in accordance with the invention.

FIG. 2 is comprised of FIGS. 2A and 2B. FIG. 2A shows the standard POCSAG format of an address and message codeword, and receiver address identification. FIG. 2B is an illustration of the format of the POCSAG address and message codewords and receiver addresses in the present invention.

FIG. 3 is-a flow chart illustrating an address identification system which may advantageously utilize the apparatus in FIG. 1.

### DETAILED DESCRIPTION OF THE PREFERRED EMBODIMENTS

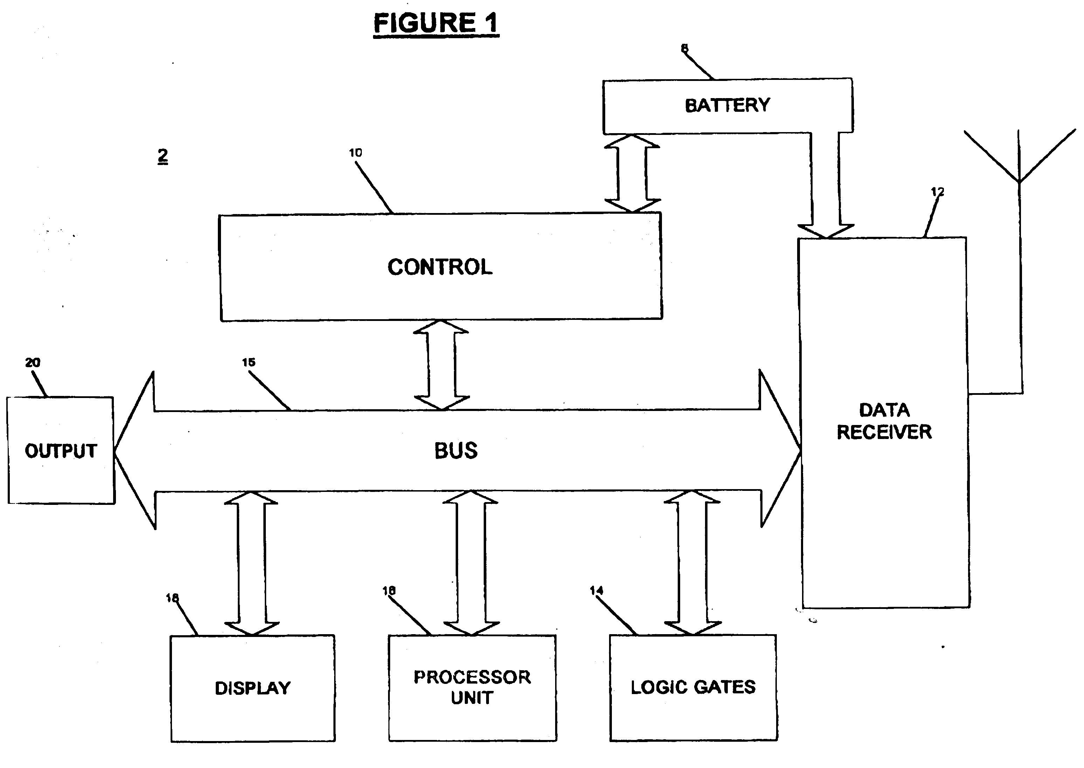

In FIG. 1 there is illustrated a schematic block diagram of an apparatus **2** embodying the present invention. The apparatus **2** of the present invention could be used in a receiver device including any of a number of conventional receivers, such as pagers and message decoders, including the type that can be inserted into the PCMCIA slot of a personal computer. The data signal receiver **12** receives the transmitted address codeword **30** (FIG. 2A) and accompanying message codewords 40 representing the transmitted data. The receiver device of the present invention is preferably adapted to receive data signals conforming to the POCSAG format. A POCSAG transmission consists of a preamble followed by batches of complete codewords, each batch commencing with a synchronization codeword. Each transmission starts with a preamble to help the receiver device attain bit synchronization and thus help in acquiring word and batch synchronization. The preamble structure assists the receiver in saving battery power. The receiver device can be turned on for a few milliseconds and then turned off again if no preamble is detected.

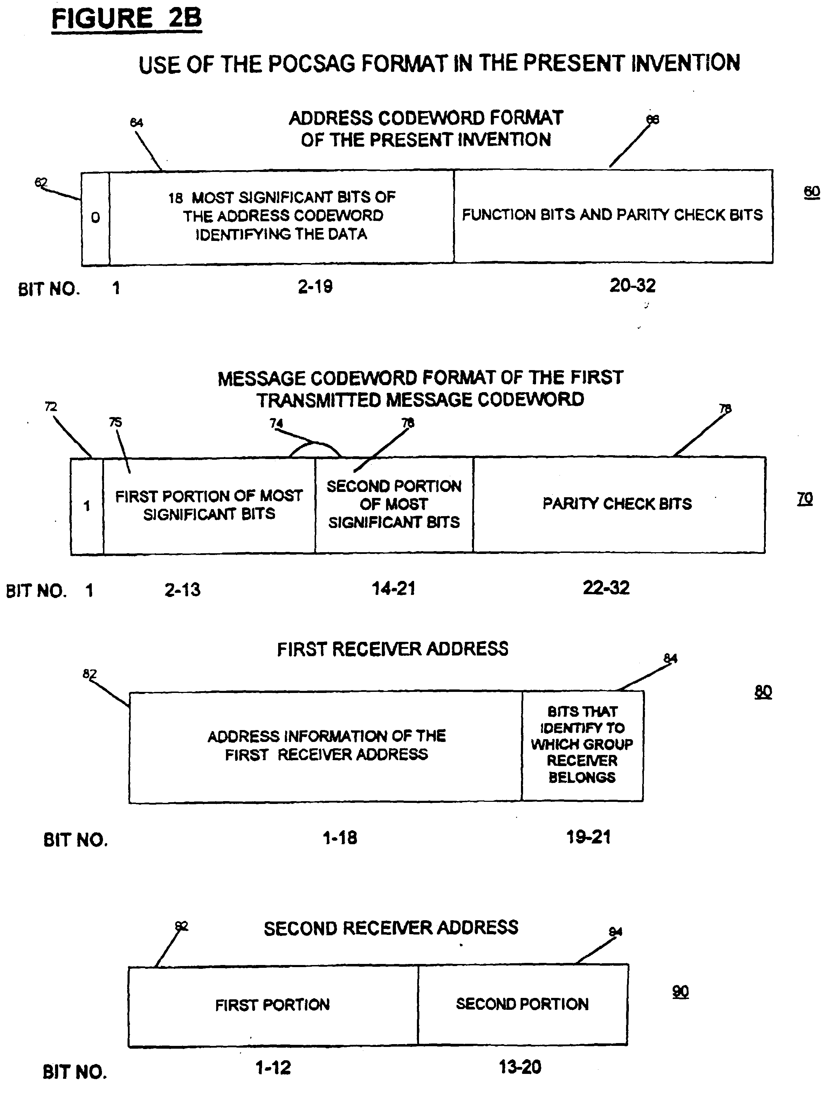

In the present invention, the control unit **10** (FIG. 1) or processor unit **16** may contain the data identifying the group to which the receiver device is allocated **84** (FIG. 2B). For example, group one receivers would only examine the first frame of the batch for an address codeword and group six receivers would only examine the sixth frame for an address codeword. FIG. 2B shows the bits identifying the group to which the receiver belongs as the last three bits **84** of the twenty-one bit first receiver address **80**. In the description of the embodiments of the present invention, the use of the term first receiver address refers to the eighteen most significant bits of the receiver address **82**. Although these three group identity bits **84** are associated with the receiver device, they will not be referred to when the term receiver address is used herein.

In FIG. 2A there is illustrated the transmitted thirty-two bit address 30 and message **40** codewords conforming to the POCSAG format. The eighteen most significant bits identifying the accompanying data is found in bit numbers two through nineteen of the POCSAG address codeword **34**. In FIG. 2B there is illustrated the thirty-two bit transmitted address codeword **60** of the present invention conforming to the POCSAG format.

According to the POCSAG format, the completion of a transmission of message codewords following the transmitted address codeword is indicated by a thirty-two bit idle codeword or subsequent address codeword following the final message codeword. The idle codeword is used in the absence of message or address codewords in the remaining frames of the batch. Message codewords may continue into the next transmitted batch. In such case, the data receiver **10** (FIG. 1) would remain activated to continue receiving batches of message codewords associated with the previously transmitted address codeword.

Each receiver device is associated with at least one first receiver address **82** (FIG. 2B), preferably eighteen bits long, and at least one second receiver address **90** which in the preferred embodiment is divided into a first **92** portion, preferably twelve bits long, and a second portion **94**, preferably eight bits long. The first receiver address **82** may identify a group of receiver users to which the user of the receiver device belongs, such as a company. The first portion **92** of the second receiver address may identify a unit within the group of receivers, such as a division within the company. The second portion **94** of the second receiver address may uniquely identify a particular receiver within the unit of the company. It should be appreciated that the particular use of the data structure may vary. For instance, the eighteen bit address codeword **60** and first receiver address **82** may identify a company or a company and a division within the company and the twenty bit message codeword **70** and second receiver address **90** may uniquely identify a particular individual within the division of the company indicated in the address codeword **60** and second receiver address **90**. The bit lengths of the address **60** and message **70** codewords and corresponding first **82** and second **90** receiver addresses, and portions thereof **92** and **94**, may also vary. Furthermore, a receiver device can be associated with a plurality of first **82** and second **90** receiver addresses indicating different groups and units of such groups to which the receiver user belongs and different unique individual identifications. The desirability of this arrangement is that it greatly expands the number of possible identifications within the POCSAG format by adding the twenty bit second receiver address **90** to the address identification code of a receiver device because **2**^{**20**} addresses exceeds one million.

An apparatus in accordance with the embodiment of the present invention is described as follows, with reference to FIGS. 1, 2A, and 2B. The data receiver **12** (FIG. 1) is the unit that initially receives the transmitted batches of data. Data receivers for detecting a data signal and repeated data words are well known in the art, and can be any one of a number of conventional data receivers, such as devices described in "Radiopaging Code No. 1," prepared by the Radiopaging Code Standards Group (1986).

The data receiver **12** as shown in FIG. 1 operates under control of the control unit **10**. The control unit **10** can consist of numerous control structures well known in the art such as a microprocessor or ALU operating under stored program control, wherein the program may be stored in a memory device such as a read only memory (ROM) and a random access memory (RAM) may be used for storing constants and operands used during processing. However, numerous other control structures known in the art can also be employed, including the use of electronically alterable memory devices such as PROMs, EPROMs, EAPROMs, and EEPROMs. Furthermore, the specific manner of implementing the components and steps of the control unit 10 may be by either a hardware implementation or by software executed in a stored program computing means such as a microprocessor, ALU, or similar type device.

The processor unit **16** (FIG. 1) which may be a microcontroller, may include an ALU, memory, registers, a program stored in a memory device suitable for storing microcontroller programs and instructions, or an array of logic gates. The processor unit **16** can also be comprised of any other structures known in the art for processing data in response to a stored program. It should also be appreciated that all or portions of the processor unit **16** such as the memory and stored program can be physically located in the control unit **10**. The processor unit **16** may also include an external memory device, such as a ROM, or an array of logic gates for representing the first **82** (FIG. 2B) and second **90** receiver addresses. Preferably, an electronically alterable or programmable memory device such as a PROM, EPROM, or EAPROM would be used to represent or store the first **82** and second **90** receiver addresses.

If an array of logic gates **14** is used to represent the first **82** and second **90** receiver addresses associated with the receiver device, the array can be implemented with a dedicated logic design, such as GALs, PLAs, and ROMs. Preferably, an electronically alterable logic design would be used, such as EEPALs. The desirability of such electronically alterable memory devices is that the first **82** and second **90** receiver addresses represented in the processor unit **16** (FIG. 1) may be modified. Furthermore, with the EAPROM memory devices, the first **82** and second **90** (FIG. 2B) receiver addresses represented in the EAPROM may be modified by remote radio transmission through over the air programming. The desirability of using the EAPROM is that the receiver user's device can be modified or altered if the receiver user switches to a new division within the company or if the receiver addresses need to be altered without having to present the receiver device for modification.

Either the processor unit **16** (FIG. 1) or some external circuitry, such as the logic gates **14**, is designed to receive the eighteen most significant bits of the transmitted address codeword 64 (FIG. 2B) from the data receiver **12** (FIG. 1) via an input output (I/O) bus **15** and determine whether the eighteen most significant bits of the transmitted address codeword **64** (FIG. 2B) match the first receiver address **82** represented or stored in the processor unit **16** or external logic gates **14**, respectively. Both the processor unit **16** and external logic gates **14** operate in response to control signals sent from the control unit **10**. The advantage of using external logic gates **14**, as opposed to the processor unit **16**, to check the address codeword **64** is that the logic gates **14** consume less power than the processor unit **16**. Therefore, it is apparent that power may be conserved because the processor unit **16** is only activated if the address codeword **64** matches the first receiver address **82**. Otherwise, the processor unit **16** would be activated to check every address codeword **64** received.

If the first receiver address **82** (FIG. 2B) matches the eighteen most significant bits of the transmitted address codeword **64**, then the processor unit **16** is able to determine whether the first message codeword **70** contains further address information. The address codeword **60** may contain information indicating that the following message codeword **70** contains further address information which is recognizable by the processor unit **16**. If the message codeword **60** contains further address information then the control unit **10** causes the twenty most significant bits **74** of the first transmitted message codeword **70** to be transferred to the processor unit **16** via the I/O bus **15**. It should be appreciated that the control unit **19** may be programmed to automatically cause the processor unit **16** or logic gates **14** to check the first transmitted message codeword **74** if the first receiver address **82** matches the transmitted address codeword **64**. The processor unit **16** determines whether a first portion **75** and a second portion **76** of the eighteen most significant bits of the message codeword respectively match the first **92** and second **94** portions of at least one second receiver address stored or represented in the processor unit **16**. Such a match indicates that the data transmitted and associated with the address codeword **60** and first message codeword **70** is intended for the receiver device. It should be appreciated that the second receiver address **80** can be represented in external logic gates **14** (FIG 1). In such case, the logic gates **14** determine whether the first message codeword **70** contains further address information and, if so, whether the twenty most significant bits of the transmitted message codeword **74** matches the second receiver address **90**.

A display **18** is designed to display to the user of the receiver device data associated with the transmitted message codewords **40** (FIG. 2A) if the receiver accepts the message codewords **40** (FIG. 2A). The display **18** can be comprised of a display device well known in the art, including liquid crystal display type devices.

An output **20** (FIG. 1) indicates the different output devices to which the transmitted message codewords **40** (FIG. 2A) can be sent should the receiver device accept the transmitted message codewords **40**. The output **20** may be a memory within the receiver or a serial I/O device coupled with a PCMCIA bus of a personal computer for data storage therein.

The bus **15** may be comprised of a common I/O bus as is well known in the art. In this embodiment the bus **15** is shared by the components of the receiver **4** and provides for the sharing of data among the devices as discussed above. The control unit **10** sends control signals and data to the different elements of the receiver **2** along the bus **15** and the different elements send data to the control unit **10** along the bus **15**. It should be appreciated that other devices well known in the art could be employed to transmit control signals and data among the devices illustrated in FIG. 1.

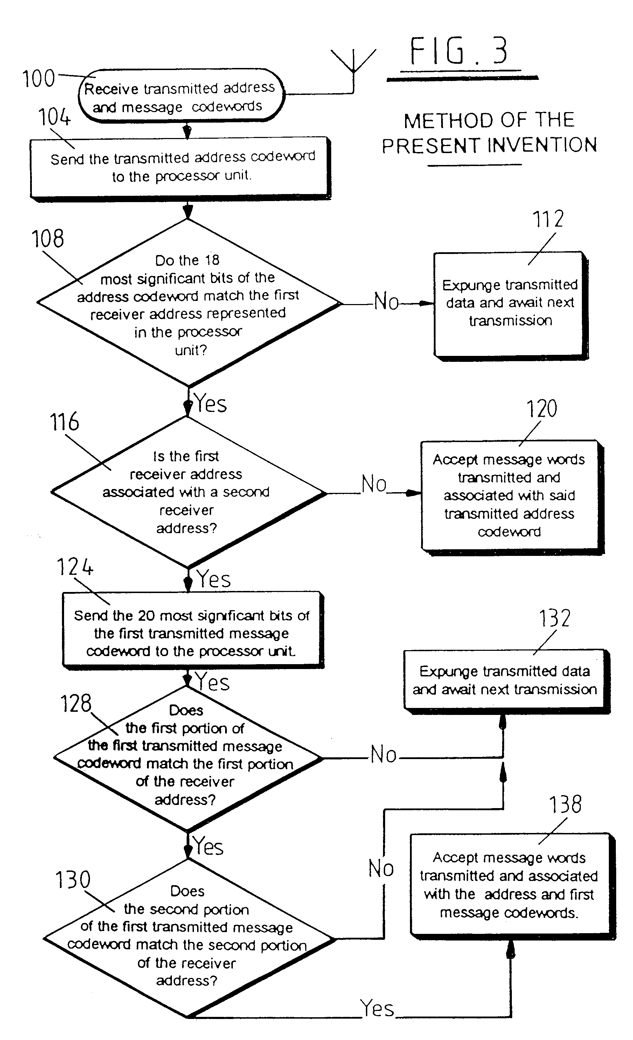

FIG. 3 illustrates a general flow chart showing how the apparatus shown in FIG. 1 accepts the message codewords **40** (FIG. 2A) transmitted and associated with the transmitted address codeword **60** (FIG. 2B). At block 100 (FIG. 3), the data receiver **12** (FIG. 1) receives the transmitted address **60** (FIG. 2B) and message **40** (FIG. 2A) codewords. Next at block **104** (FIG. 3), the data receiver **12** (FIG. 1) operating under control of the control unit **10** transfers the transmitted address codeword **60** (FIG. 2B) to the processor unit **16** (FIG. 1) or logic gates **14** external to the processor via the bus **15**. Next, at decision block **108** (FIG. 3), either the processor unit **16** or logic gates **14** operating in response to data received from the data receiver **12** and control signals sent from the control unit **10** determines whether the eighteen most significant bits of the transmitted address codeword **64** (FIG. 2B) match the first receiver address **82** represented in the processor unit **16** (FIG. 1) or logic gates **14**, respectively. If there is no match, the NO branch is taken to block **112** (FIG. 3) where the data receiver **12** (FIG. 1), under control of the control unit **10**, expunges the transmission associated with the non-matching address codeword **64**, reduces power consumption, and returns to the state wherein it checks periodically for a transmitted preamble and synchronization codeword indicating another transmitted batch to check.

If the eighteen most significant bits of the transmitted address codeword **64** (FIG. 2B) match the first receiver address **82**, that the YES branch is taken to decision block **116** (FIG. 3) where either the processor unit **16** (FIG. 1) or logic gates **14** determines whether the first transmitted message codeword **70** contains further address information. If the first transmitted message codeword **70** does not contain further address information, then the NO branch is taken to block **120** (FIG. 3) where the control unit **10** (FIG. 1) causes the data receiver **12** to transfer the message codewords **40** (FIG. 2A) transmitted and associated with the transmitted address codeword **60** to the output **20** and the display **18** via the bus **15**. It should be appreciated that it is possible to have either the processor unit **16** or external logic **14** immediately determine whether the second receiver address **90** matches the transmitted message codeword **40**. In such case blocks **116** and **120** are skipped, and block **124** directly follows block **118**.

The existence of condition **120** (FIG. 3) may indicate that the first receiver address **70** (FIG. 2B) is a unique address identifier for the receiver or a group of receivers to which the data transmission is intended. For instance, a receiver user may have a first receiver address **82** and associated second receiver addresses **90**, with first **92** and second **94** portions, represented in the receiver to indicate the company, division, and unique corporate address of the receiver. The receiver may also be associated with a first receiver address **82** that is not associated with a second receiver address **90**. This first *receiver* address **82** may identify a personal address of the receiver user thereby allowing personal transmissions unrelated to corporate activity to be sent to the receiver.

If it is determined that the first transmitted message codeword **70** contains further address identification information, then the YES branch is taken to block **124** (FIG. 3) where the data receiver **12** (FIG. 1) operating under control of the control unit **10** transfers the twenty most significant bits **74** (FIG. 2B) of the first transmitted message codeword to either the processor unit **16** (FIG. 1) or logic gates **14** via the bus **15**. Next, at decision block **128** (FIG. 3), either the processor unit **16** or logic gates **14** determines whether the first portion **75** of the first transmitted message codeword matches the first portion **92** of at least one second receiver address (FIG. 2B). If the first portion **75** of the first transmitted message codeword does not match the first portion **92** of at least one second receiver address, then the NO branch is taken to block **132** (FIG. 3) where the receiver **2** (FIG. 1) ignores the transmitted data, reduces power consumption, and awaits the next transmission. The existence of condition **132** after a determination that the first portions **92** and **75** do not match may indicate that the receiver user is not part of the unit identified by the first portion **75** of the message codeword.

If the first portion **75** of the message codeword matches the first portion **92** of at least one second receiver address, then the YES branch is taken to decision block **130** (FIG. 3) where either the processor unit **16** or logic gates **14** determines whether the second portion **76** of the message codeword matches the second portion **94** of at least one second receiver address. If the second portions **76** and **92** do not match, then the NO branch is taken to block **132** where the system **2** (FIG. 1) expunges the transmitted data, reduces power consumption, and awaits the next transmission. The existence of condition **132** (FIG. 3) after the failure of the second portions **76** and **92** to match may indicate that the transmission was to a corporate unit to which the receiver user belongs but not intended for that unique receiver or all the receivers within that unit.

If the second portion **76** of the message codeword matches the second portion **94** of at least one second receiver address, then the YES branch is taken to block **136** where the control unit **10** (FIG. 1) causes the data receiver **12** to transfer the message codewords **40** (FIG. 2A) transmitted and associated with the transmitted address codeword **60** (FIG. 2B) and the first transmitted message codeword **70** to the output **20** and the display **18** via the bus **15**.

With the present invention, a data transmission can be made to an entire group of receiver users simultaneously with a single transmission in the following manner. All receiver users within a particular group, such as a corporation, may be associated with a common first receiver address **80** which is itself associated with at least two second receiver addresses **90**. One of the second receiver addresses identifies the receiver as a member of a unit within the group of receivers and another of the second receiver addresses uniquely identifies the receiver. The first portion **92** of the two second receiver addresses identifies a unit within the group, such as a division within the corporation, to which the receiver user belongs. The two second receiver addresses associated with each receiver user within the unit of the group have a common first portion **92**. To uniquely identify a particular receiver in the unit of the group of receivers, one of the second receiver addresses of each receiver within the unit has a unique second portion **94** thereby associating each receiver with a unique second receiver addresses. Furthermore, each receiver within the unit is associated with a second receiver address **90** common to all receiver users within the group, whereby the first **92** and second **94** portions of that second receiver address are common to all receivers within the unit. To transmit data to all the receiver users within a unit, the most significant bits of the transmitted address codeword **64** and the first message codeword **74**, and first **92** and second **94** portions thereof, would respectively contain the first **82** and second **90** receiver addresses common to all receiver users within the unit. To transmit data to a particular receiver user within a unit of the group, the most significant bits of the transmitted address codeword **64** would contain the first receiver address **82** common to members of the group, the first portion **75** of the first transmitted message word would contain the first portion of the second receiver address **92** common to all members of the unit within the group, and the second portion **76** of the first transmitted message codeword would contain the second portion **94** of the second receiver address that uniquely identifies that particular user within the unit of the group.

It should be appreciated that the message codeword **40** may not be divided into a first and second portion. In such case the processor unit **16** or logic gates **14** would check the twenty most significant bits of the message codeword **74** to determine if it matches the second receiver address **90** represented therein. It should be appreciated that further ways of identifying groups of receiver users are possible when using the address and first message codeword as identification information. For instance, the address codeword and first receiver address may contain information identifying a group of receivers and divisions therein and the first message codeword and second receiver address may identify a unique data user within the group or division identified in the address codeword. Further, the portions of the first message codeword and second receiver address may be of varying length or divided into further portions representing multiple divisions within the group of receivers.

The desirability of this arrangement is evident because an entire unit of receiver users within a larger group associated with common first **82** and second **90** receiver addresses may all be paged with a single data transmission. The present invention is an improvement over prior art pager systems using the POCSAG format because with prior art systems each individual receiver user of the group would have to be paged sequentially using their unique address identifier. The present invention allows an entire group of receiver users sharing common first **82** and second **90** receiver addresses to receive the same transmitted message codewords **40** (FIG. 2A) with a single transmission thereby using the electric wave and frequency range efficiently.

It will, of course be understood that further modifications of the present invention in its various aspects, will be apparent to those skilled in the art, some being apparent only after study and others being matters of routine electronic and mechanical design. Other embodiments are also possible, their specific designs depending upon the particular application. As such, the scope of the invention should not be limited by the particular embodiment herein described but should be defined only by the appended claims and equivalents thereof.

## Claims

1. An address identification system for determining whether a transmitted address word matches at least one first receiver address associated with a receiver and whether a first transmitted message word transmitted with a plurality of message words matches at least one second receiver address associated with a receiver, wherein the transmitted address and message words and the first and second receiver addresses are comprised of a plurality of bits, the identification system comprising:
a. a receiver means for determining whether the transmitted address word matches at least one first receiver address, and
b. the receiver means further determining whether the first transmitted message word contains further address information, and
c. the receiver means further determining whether the first transmitted message word matches at least one second receiver address if the first transmitted message word contains address information.

2. A receiver type device including the address identification system of claim 1, further including means for accepting the transmitted message words if said transmitted address word matches at least one first receiver address and the first transmitted message word does not contain address information.

3. A receiver type device including the address identification system of claim 1, further including means for accepting the transmitted message words following the first transmitted message word if at least one first receiver address matches the transmitted address word, the first transmitted message word contains further address information, and at least one second receiver address associated matches the first transmitted message word.

4. A receiver type device including the address identification system of claim, wherein the first transmitted message word and second receiver address are comprised of a first and second portion and wherein the receiver accepts the message words if the first and second portions of the first transmitted message word matches the first and second portions of the second receiver address.

5. A receiver type device including the address identification system of claim 1, wherein logic gates determine whether the transmitted address word matches at least one first receiver address and wherein a processor unit determines whether the first transmitted message word contains further address information and whether the first transmitted message word matches at least one second receiver address.

6. The receiver of claim 5, wherein the power consumption of the processor unit means is reduced if the first transmitted message word does not match at least one second receiver address.

7. The receiver of claim 3, further displaying the data contained in the message words accepted by the receiver.

8. The receiver of claim 4, further displaying the data contained in the message words accepted by the receiver.

9. The receiver of claim 5, wherein the first receiver address is stored in the logic gates and the second receiver address is stored within the processor unit.

10. The receiver of claim 1, wherein the first and second receiver addresses can be electronically altered.

11. A group of receivers including the address identification system of claim 1, wherein the receivers in the group have a common first receiver address that is associated with a plurality of second receiver addresses, wherein the second receiver addresses are comprised of a first and a second portion, wherein the first portion of the second receiver addresses associated with a receiver identifies a unit of receivers within the group to which the receiver belongs, wherein the second portion of one of the second receiver addresses associated with a receiver uniquely identifies a particular receiver within the unit, and wherein the second portion of another second receiver address associated with the receiver is common to all receivers that belong to the unit.

12. The group of receivers of claim 11, wherein a particular receiver in the group accepts the transmission of message words if at least one first receiver address matches the transmitted address word and at least one second receiver address associated with the first receiver address matches the first transmitted message word.

13. The group of receivers of claim 11, further accepting a transmission of message words if the first receiver address common to all receivers in the group matches the transmitted address word and the first and second portions of a second receiver addresses common to all receivers in the group match the first transmitted message word.

14. A method for checking whether a transmitted address word matches at least one first receiver address associated with a receiver and whether a first transmitted message word transmitted with a plurality of message words matches at least one second receiver address associated with the receiver, wherein the transmitted address and message words and the first and second receiver addresses are comprised of a plurality of bits, comprising the steps of:
a. determining with the receiver whether the transmitted address word matches at least one first receiver address, and
b. only if the transmitted address word matches the first receiver address word, then determining with the receiver whether the first transmitted message word contains further address information, and
c. only if the first transmitted message word contains further information, then determining with the receiver whether the first transmitted message word matches at least one second receiver address, and
d. only if the first transmitted message word matches at least one second receiver address, then accepting with the receiver the transmitted message words transmitted after the address word and first message word.

15. The method of claim 14, further comprising the step of accepting with the receiver the transmitted message words following the transmitted address word if the transmitted address word matches the first receiver address and the first transmitted message word does not contain further address information.

16. The method of claim 14, further comprising the step of reducing the power consumption of the receiver if the transmitted address codeword does not match the first receiver address.

17. The method of claim 14, further comprising the step of reducing the power consumption of the receiver if the first transmitted message codeword does not match the second receiver address.

18. The method of claim 14, further comprising the step of displaying with the receiver the data accepted.

19. The method of claim 14, further comprising the step of storing the data accepted in the receiver.

20. The method of claim 14, further comprising the step of transferring the data accepted by the receiver to a computer for storage therein.
